# EUROPÄISCHE PATENTSCHRIFT

(11) **EP 1 397 953 B1**
(45) Veröffentlichungstag und Bekanntmachung des Hinweises auf die Patenterteilung: **20.04.2011**
(21) Anmeldenummer: 03019126.6
(22) Anmeldetag: 23.08.2003
(51) Int. Cl.: A01D 89/00

(54) **Tragbalken für Förderzinken**
Carrier for transport fingers
Poutre pour les doigts de transport

(30) Priorität: 06.09.2002 DE 10241896
(43) Veröffentlichungstag der Anmeldung: 17.03.2004
(73) Patentinhaber: CLAAS Selbstfahrende Erntemaschinen GmbH, 33428 Harsewinkel (DE)
(72) Erfinder: Drewes, Rainer, 59320 Ennigerloh (DE); Bürmann, Dominik, 33415 Verl (DE)

(56) Entgegenhaltungen:
- EP-A1- 0 958 732
- DE-B- 1 204 447
- GB-A- 1 006 711
- US-A- 2 527 887
- US-A- 5 595 052

## Beschreibung

Die Erfindung bezieht sich auf einen Tragbalken und auf mit ihm verbindbare Förderzinken an landwirtschaftlichen Erntemaschinen, insbesondere für die Haspel des Schneidwerkes eines Mähdreschers nach dem Oberbegriff des 1. Patentanspruches. Dokument EP-0958732-A1 offenbart einen Tragbalken mit allen Kennzeichen aus dem Oberbegriff vom Anspruch 1.

Förderzinken sowie ihre Befestigung am Tragbalken sind bereits in verschiedenen Ausführungen bekannt. Bei den meisten Haspelkonstruktionen werden als Zinkenträger zylindrische Rohre verwendet, an denen die Förderzinken mittels Schrauben oder durch Klemmverbindungen befestigt sind. Die überwiegend benutzten Doppel- oder Einfachzinken aus Federstahl werden durch Schrauben mit dem Tragbalken verbunden. Da sich hierbei die freiliegenden spiralförmigen Federwindungen unmittelbar unterhalb des Tragbalkens befinden, treten unter ungünstigen Erntebedingungen in diesem Bereich häufig Umwicklungen von Erntegut auf, die in aufwändiger Handarbeit beseitigt werden müssen. Auch bei den Einfach-Stahlfederzinken, deren Federwindungen den Außenumfang der Tragbalken umschließen und die über eine Schraubverbindung am Tragbalken befestigt sind, besteht im Befestigungsbereich und an den Federwindungen eine Wickelgefahr des Erntegutes. Diese Gefahr besteht auch bei den Förderzinken (DE 197 49 088. A1), die aus einem nicht metallischen Material bestehen und in gleicher Weise mit dem Tragbalken verbunden sind.

Aus der DE 198 58 452 A1 ist weiterhin eine Haspel für Schneidwerke an Erntemaschinen bekannt, bei der die Tragbalken mit einer oder mehreren Längsnuten versehen sind. In diese Längsnuten greifen Arretierungen der Doppelfederzinken ein und sichern so deren Lage am Tragbalken. Zusätzlich können die Zinken durch ein mittig angebrachtes Klemmstück gesichert werden. Da die beiden Federwindungen der Zinken hierbei unterhalb der Tragbalken angeordnet sind und damit Ansatzpunkte für Wicklungen des Erntegutes bilden, ist zur Herabsetzung der Wickelgefahr der vordere Bereich der Federwindungen und des Tragbalkens durch ein zusätzliches Abdeckblech geschützt, das mit Klemmschrauben am Tragbalken befestigt ist. Neben der aufwändigen Ausführung ist diese spezielle Variante zudem nur für die Befestigung von Doppelfederzinken aus Stahl anwendbar.

Der Erfindung liegt die Aufgabe zugrunde, einerseits die Tragbalken für Förderzinken so auszuführen, dass eine störungsfreie und kontinuierliche Erntegutförderung im Haspelbereich erfolgt und eine universelle Befestigung von verschiedenen Zinkenausführungen am Tragbalken möglich ist und andererseits jeden einzelnen Förderzinken so auszubilden, dass sich der Federzinken an seinem Befestigungsende formschlüssig am Tragbalken absützt.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die erfindungsgemäße Ausführung der Tragbalken und der Zinkenbefestigung wird auch unter ungünstigen Bedingungen die Wickelgefahr des Erntegutes im Befestigungsbereich der Förderzinken wesentlich verringert bzw. völlig ausgeschlossen. Infolge der neuartigen Profilierung der Tragbalken werden die spiralförmigen Federwindungen der Förderzinken von den Tragbalken zum größten Teil selbst abgedeckt. Ein Kontakt der Federwindungen mit dem Erntegut ist somit weitgehend ausgeschlossen. Die nachträgliche Anbringung eines gesonderten zusätzlichen Wickelschutzes im Befestigungsbereich der Förderzinken ist nicht erforderlich. An den einheitlich gestalteten Tragbalken können sowohl Stahlfederzinken als auch nicht metallische Zinken ohne jegliche Änderungen befestigt werden. Somit sind für unterschiedliche Zinkenarten keine kostenaufwändigen Sonderanfertigungen von Tragbalken notwendig. Weiterhin wird die Wickelgefahr durch eine Vergrößerung der Querschnittsabmessungen der Tragbalken im Vergleich zu bekannten Tragbalkendurchmessern wesentlich verringert. Neben der Verwendung der erfindungsgemäßen Tragbalken an Haspeln von Mähdreschern, ist deren Einsatz auch an anderen Erntemaschinen mit Haspeln, z.B. an Schwadmähern oder Feldhäckslern sowie an Schwadaufnahmetrommeln mit Zinken oder an sonstigen Fördereinrichtungen möglich.

Die Erfindung wird nachstehend an einem Ausführungsbeispiel näher erläutert. Die zugehörigen Zeichnungen zeigen
- Fig. 1: Eine Seitenansicht des vorderen Bereiches eines Mähdreschers

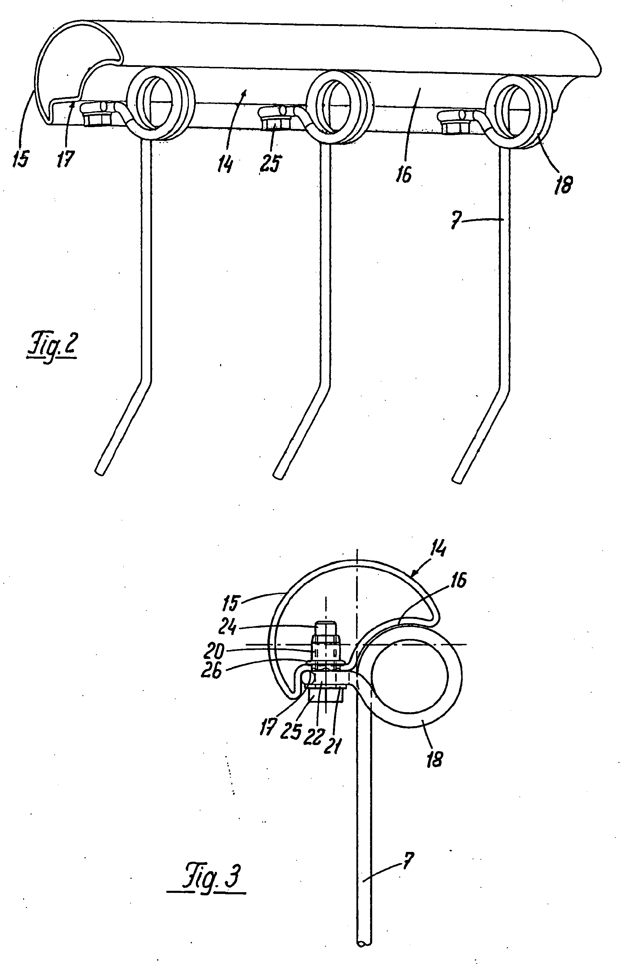

- Fig. 2: Eine perspektivische Darstellung des Tragbalkens mit daran angeordneten Stahlfederzinken
- Fig. 3: Die Seitenansicht nach Fig. 2

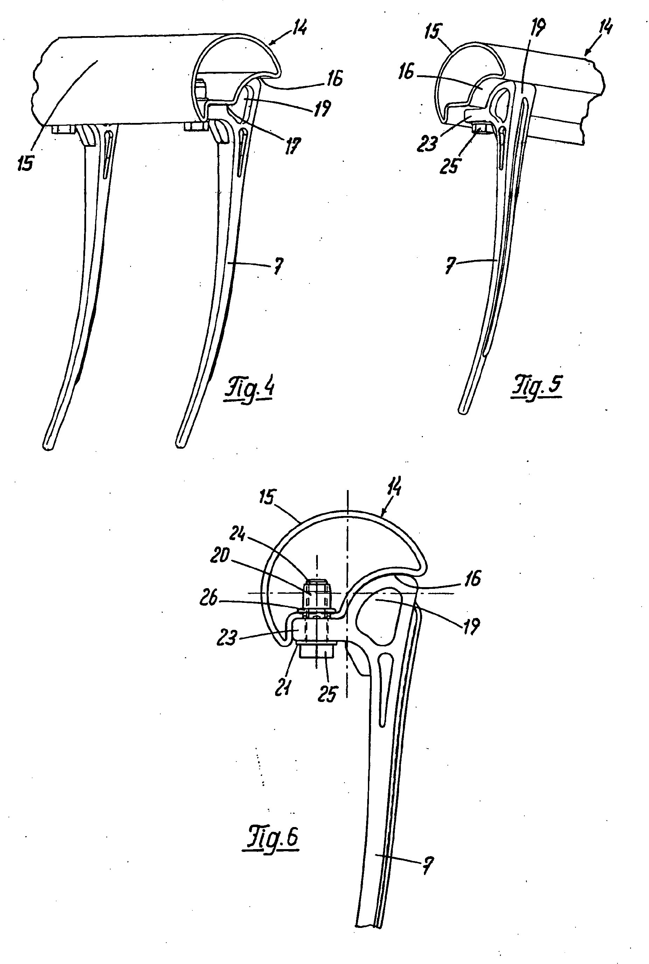

- Fig. 4: Eine perspektivische Darstellung eines Tragbalkens mit daran angeordneten Kunststoffzinken (Ansicht von links)
- Fig. 5: Eine perspektivische Darstellung eines Tragbalkens mit Kunststoffzinken (Ansicht von rechts)
- Fig. 6: Die Seitenansicht nach Fig. 5

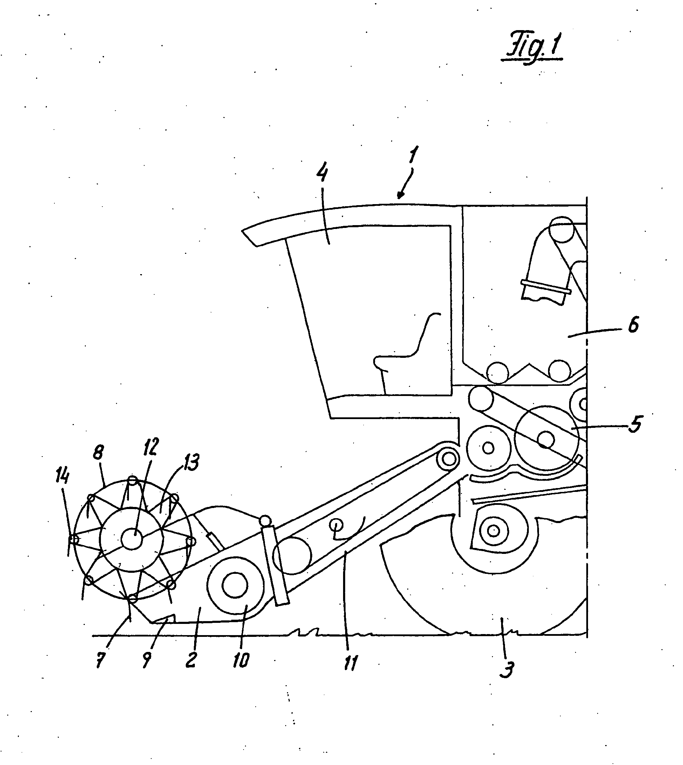

Bei einem in der Fig. 1 teilweise dargestellten Mähdrescher 1 mit Schneidwerk 2, Triebrädern 3, Fahrerkabine 4, Drescheinrichtung 5 und Korntank 6 wird das Erntegut von den Förderzinken 7 der Haspel 8 erfasst und in Richtung zum Mähmesser 9 geleitet und von diesem abgeschnitten. Das geschnittene Gut wird anschließend von der Einzugsschnecke 10 kontinuierlich zur Mitte gefördert und dort an den Einzugskanal 11 übergeben, der das Erntegut der Drescheinrichtung 5 zuführt. Die Haspel 8 ist in horizontaler und vertikaler Richtung einstellbar und unterstützt die gleichmäßige Erntegutförderung. Sie besteht aus einer axial angeordneten und angetriebenen Haspelwelle 12, an der in Abständen Haspelsterne 13 befestigt sind. An deren Umfang sind mehrere, über die gesamte Breite der Haspel 8 durchgehende Tragbalken 14 angeordnet. An diesen sind mit Abstand gesteuerte Förderzinken 7 befestigt, die als Einfach- oder Doppelzinken ausgebildet sind und aus federndem Stahl oder Kunststoff hergestellt sind. Die Tragbalken 14 bestehen aus einem gewalzten oder stranggepressten ungleichförmigen Hohlprofil. In Fahrtrichtung des Mähdreschers 1 gesehen, weist das Hohlprofil im vorderen und oberen Bereich eine gleichmäßig nach außen gewölbte Oberfläche 15 und im rückwärtigen Bereich eine nach innen gewölbte Anlage- und Abdeckfläche 16 sowie im unteren Bereich eine ebene Befestigungsfläche 17 für die Förderzinken 7 auf. Die Anlage- und Abdeckfläche 16 der Tragbalken 14 ist der Form der Federwindungen 18 bzw. des oberen Teilstückes 19 der Förderzinken 7 angepasst. Die Befestigungsfläche 17 für die Förderzinken 7 ist etwa horizontal angeordnet und einheitlich für die Befestigung von Stahl- und Kunststoffzinken ausgebildet. Die Befestigung der Förderzinken 7 am Tragbalken 14 erfolgt über Blindnietmuttern. Hierzu sind in der Befestigungsfläche 17 für die Förderzinken 7 im Tragbalken 14 vorzugsweise sechskantförmige Löcher angeordnet. In diesen Löchern sind Hülsenmuttern 20 eingesetzt, die über einen kopfseitigen Bund 21 mit der Öse 22 bzw. dem Steg 23 der Förderzinken 7 in Verbindung stehen. Die Hülsenmuttern 20 bestehen aus einem flexiblen Werkstoff und sind durch den sechskantförmigen Querschnitt der Löcher in diesen verdrehsicher angeordnet. Von der Außenseite aus sind in den Hülsenmuttern 20 Blindniete 24 mit Gewinde eingesetzt. Durch eine Drehbewegung der Blindniete 24 werden die Hülsenmuttern 20 in Richtung zum Kopf 25 der Blindniete 24 gezogen. Durch ein weiteres Drehen der Blindniete 24 bildet sich dadurch unterhalb der Löcher am Tragbalken 14 eine Wulst 26 mit einem vergröβerten Durchmesser, wodurch eine feste Verbindung zwischen dem Tragbalken 14 und den Förderzinken 7 hergestellt wird. Das Lösen der Förderzinken 7 erfolgt beim Auswechseln durch ein entgegengesetztes Drehen am Kopf 25 der Blindniete 24. Der Kopf 25 der Blindniete 24 ist ganz oder teilweise durch die vordere gewölbte Oberfläche 15 der Tragbalken 14 verdeckt, so dass auch dieser Bereich vor einer Wickelgefahr geschützt ist.

### BEZUGSZEICHENAUFSTELLUNG

- 1: Mähdrescher
- 2: Schneidwerk
- 3: Triebräder
- 4: Fahrerkabine
- 5: Drescheinrichtung
- 6: Korntank
- 7: Förderzinken
- 8: Haspel
- 9: Mähmesser
- 10: Einzugsschnecke
- 11: Einzugskanal
- 12: Haspelwelle
- 13: Haspelsterne
- 14: Tragbalken
- 15: gewölbte Oberfläche
- 16: Anlage- und Abdeckfläche
- 17: Befestigungsfläche
- 18: Federwindungen
- 19: oberes Teilstück
- 20: Hülsenmuttern
- 21: Bund
- 22: Öse
- 23: Steg
- 24: Blindniete
- 25: Kopf
- 26: Wulst

- FR: Fahrtrichtung

## Patentansprüche

1. Tragbalken für Förderzinken an landwirtschaftlichen Erntemaschinen, insbesondere für die Haspel des Schneidwerkes eines Mähdreschers, wobei die drehbar angetriebene Haspel aus einer mittigen Haspelwelle mit mehreren mit Abstand daran angeordneten Haspelsternen besteht, an denen am äußeren Umfang gelagerte und über die gesamte Breite der Haspel durchgehende Tragbalken mit daran befestigten Förderzinken angeordnet sind und wobei den Förderzinken Federwindungen und/oder obere Teilstücke angeformt sind, wobei
die Tragbalken (14) aus einem schalenförmig profilierten Träger mit ebenen und/oder gekrümmten Oberflächen und einem ungleichförmigen Querschnitt besteht, wobei der Tragbalken (14) einen Bereich aufweist, der die Federwindungen (18) bzw. das obere Teilstück (19) der Förderzinken (7) formgleich mindestens teilweise umgreift, **dadurch gekennzeichnet, dass** der Tragbalken (14) aus einem rohrförmigen Hohlprofil besteht, wobei das Profil, in Fahrtrichtung (FR) der Erntemaschine gesehen, im vorderen und oberen Bereich einen nach außen geformte Oberfläche (15) und im rückwärtigen Bereich eine nach innen gewölbte Anlage- und Abdeckfläche (16) sowie im unteren Bereich eine ebene Befestigungsfläche (17) für die Förderzinken (7) aufweist.

2. Tragbalken nach einem oder mehreren der vorhergehenden Ansprüche,
**dadurch gekennzeichnet,**
**dass** die Anlage- und Abdeckfläche (16) des Tragbalkens (14) der Form der Federwindungen (18) bzw. des oberen Teilstückes (19) der Förderzinken (7) angepasst ist.

3. Tragbalken nach einem oder mehreren der vorhergehenden Ansprüche,
**dadurch gekennzeichnet,**
**dass** die Befestigungsfläche (17) für die Förderzinken (7) etwa horizontal angeordnet und einheitlich für die Befestigung von Stahl- und Kunststoffzinken ausgebildet ist.

4. Tragbalken nach Anspruch 1,
**dadurch gekennzeichnet,**
**dass** der Tragbalken (14) aus einem ungleichförmigen hohlraumfreien Profil besteht.

5. Tragbalken nach einem oder mehreren der vorhergehenden Ansprüche,
**dadurch gekennzeichnet,**
**dass** der Tragbalken (14) aus einem gewalzten oder stranggepressten Profil besteht.

6. Tragbalken nach einem oder mehreren der vorhergehenden Ansprüche,
**dadurch gekennzeichnet,**
**dass** die Förderzinken (7) als Einfach- oder Doppelzinken ausgebildet und aus Stahl oder aus einem nicht metallischen Material bestehen.

7. Tragbalken nach einem oder mehreren der vorhergehenden Ansprüche,
**dadurch gekennzeichnet,**
**dass** die Förderzinken (7) mittels Blindnietmuttern am Tragbalken (14) befestigt sind.

8. Tragbalken nach einem oder mehreren der vorhergehenden Ansprüche,
**dadurch gekennzeichnet,**
**dass** der Kopf (25) der Blindniete (24) ganz oder teilweise durch die vordere Oberfläche (15) des Tragbalkens (14) verdeckt angeordnet ist.

## Claims

1. A carrier beam for conveyor tines on agricultural harvesting machines, in particular for the reel of the cutting mechanism of a combine harvester, wherein the rotatably driven reel comprises a central reel shaft with a plurality of reel stars which are arranged at a spacing thereon and on which are arranged carrier beams mounted at the outer periphery and extending continuously over the entire width of the reel and having conveyor tines secured to the carrier beam, and wherein spring windings and/or upper portions are formed on the conveyor tines, wherein the carrier beam (14) comprises a carrier which is profiled in a shell shape and which has flat and/or curved surfaces and is of an irregular cross-section, wherein the carrier beam (14) has a region which at least in part embraces the spring windings (18) or the upper portion (19) of the conveyor tines (7) in the same shape, **characterised in that** the carrier beam (14) comprises a hollow tubular profile, wherein the profile, viewed in the direction of travel (FR) of the harvesting machine, in the front and upper region has an outwardly curved surface (15) and in the rearward region an inwardly curved contact and cover face (16) as well as in the lower region a flat fixing surface (17) for the conveyor tines (7).

2. A carrier beam according to claim 1 **characterised in that** the contact and cover face (16) of the carrier beam (14) is adapted to the shape of the spring windings (18) or the upper portion (19) of the conveyor tines (7).

3. A carrier beam according to one or more of the preceding claims **characterised in that** the fixing surface (17) for the conveyor tines (7) is arranged approximately horizontal and is uniformly adapted for fixing steel and plastic tines.

4. A carrier beam according to claim 1 **characterised in that** the carrier beam (14) comprises an irregular cavity-free profile.

5. A carrier beam according to one or more of the preceding claims **characterised in that** the carrier beam (14) comprises a rolled or extruded profile.

6. A carrier beam according to one or more of the preceding claims **characterised in that** the conveyor tines (7) are in the form of single or double tines and comprise steel or a non-metallic material.

7. A carrier beam according to one or more of the preceding claims **characterised in that** the conveyor tines (7) are fixed to the carrier beam (14) by means of blind rivet nuts.

8. A carrier beam according to one or more of the preceding claims **characterised in that** the head (25) of the blind rivets (24) is arranged concealed entirely or partially by the front surface (15) of the carrier beam (14).

## Revendications

1. Poutre porteuse pour des dents de transport sur des machines agricoles de récolte, en particulier pour le rabatteur du tablier de coupe d'une moissonneuse-batteuse, le rabatteur entraîné en rotation étant composé d'un arbre central de rabatteur et de plusieurs étoiles de rabatteur qui sont disposées à intervalles sur celui-ci et sur lesquelles sont disposées des poutres porteuses montées à la périphérie extérieure et s'étendant sur toute la largeur du rabatteur, auxquelles sont fixées des dents de transport, et des spires de ressort et/ou des portions supérieures étant formées sur les dents de transport, la poutre porteuse (14) étant constituée d'une poutre profilée en forme de cuvette avec des surfaces planes et/ou courbes et une section irrégulière, la poutre porteuse (14) présentant une zone qui entoure, en épousant leur forme, au moins partiellement les spires de ressort (18) ou la portion supérieure (19) des dents de transport (7), **caractérisée en ce que** la poutre porteuse (14) est constituée d'un profil creux tubulaire, le profil présentant, vu dans la direction de marche (FR) de la machine de récolte, dans la partie avant et supérieure une surface orientée vers l'extérieur (15) et dans la partie arrière une surface d'appui et de recouvrement (16) incurvée vers l'intérieur ainsi que, dans la partie inférieure, une surface de fixation plane (17) pour les dents de transport (7).

2. Poutre porteuse selon une ou plusieurs des revendications précédentes, **caractérisée en ce que** la surface d'appui et de recouvrement (16) de la poutre porteuse (14) est adaptée à la forme des spires de ressort (18) ou de la portion supérieure (19) des dents de transport (7).

3. Poutre porteuse selon une ou plusieurs des revendications précédentes, **caractérisée en ce que** la surface de fixation (17) pour les dents de transport (7) est approximativement horizontale et est réalisée de manière standard pour la fixation de dents en acier et en matière plastique.

4. Poutre porteuse selon la revendication 1, **caractérisée en ce que** la poutre porteuse (14) est constituée d'un profil irrégulier, sans espace intérieur.

5. Poutre porteuse selon une ou plusieurs des revendications précédentes, **caractérisée en ce que** la poutre porteuse (14) est constituée d'un profil laminé ou extrudé.

6. Poutre porteuse selon une ou plusieurs des revendications précédentes, **caractérisée en ce que** les dents de transport (7) sont réalisées sous forme de dents simples ou doubles et composées d'acier ou d'un matériau non métallique.

7. Poutre porteuse selon une ou plusieurs des revendications précédentes, **caractérisée en ce que** les dents de transport (7) sont fixées à la poutre porteuse (14) au moyen d'écrous à sertir en aveugle.

8. Poutre porteuse selon une ou plusieurs des revendications précédentes, **caractérisée en ce que** la tête (25) des rivets aveugles (24) est disposée de manière à être entièrement ou partiellement recouverte par la surface avant (15) de la poutre porteuse (14).
